# EUROPÄISCHE PATENTSCHRIFT

(11) **EP 2 042 251 B1**
(45) Veröffentlichungstag und Bekanntmachung des Hinweises auf die Patenterteilung: **09.06.2010**
(21) Anmeldenummer: 08014419.9
(22) Anmeldetag: 13.08.2008
(51) Int. Cl.: B21K 1/54, B21K 1/60, F16B 19/05

(54) **Verfahren zum Herstellen eines Schliessringbolzens und Schliessringbolzen**
Method for manufacturing a bolt of the swaged-on locking collar type and swaged-on locking collar type bolt
Procédé de fabrication d'un boulon à bague d'arrêt et boulon à bague d'arrêt

(30) Priorität: 29.09.2007 DE 102007046788
(43) Veröffentlichungstag der Anmeldung: 01.04.2009
(73) Patentinhaber: GESIPA Blindniettechnik GmbH, 60528 Frankfurt/Main (DE)
(72) Erfinder: Timmermann, Rüdiger, 65185 Wiesbaden (DE)
(74) Vertreter: Knoblauch, Andreas

(56) Entgegenhaltungen:
- EP-A- 0 304 070
- EP-A- 0 638 378
- GB-A- 956 322
- US-A- 3 426 375

## Beschreibung

Die Erfindung betrifft ein Verfahren zum Herstellen eines Schließringbolzens, der eine Haltegeometrie aufweist, die als radial umlaufende Rillen ausgebildet wird, wobei die Rillen durch mindestens einen senkrecht zu den Rillen verlaufenden Steg unterbrochen werden. Ferner betrifft die Erfindung einen Schließringbolzen mit einem Schaft, der eine Haltegeometrie aufweist, die als radial umlaufender Rillen ausgebildet ist, wobei die Rillen durch mindestens einen Steg unterbrochen sind.

In GB 956 322 A ist ein Schließringbolzen offenbart, der gleichzeitig als Dorn eines Blindniets dient und dementsprechend an einem Ende einen Senkkopf aufweist. Am anderen Ende weist der Schließringbolzen Halterillen auf, die für den Angriff eines Werkzeugs dienen. Zwischen den Halterillen und dem Senkkopf weist der Schließringbolzen eine Sollbruchstelle und umlaufende Rillen auf, die durch drei senkrecht zu den Rillen verlaufende Stege unterbrochen werden. Nach Ausformen eines Blindnietkopfes durch radiale Verlagerung des Schließringbolzens gegenüber einer Hülse erfolgt eine Verformung eines als Schließring ausgebildeten Teils der Hülse. Der Teil wird dabei im Bereich einer Nut plastisch in die Rillen hineingedrückt, so dass eine unlösbare, formschlüssige Verbindung entsteht.

In EP 0 638 378 A1 ist ein Verfahren zum Herstellen eines Dorns eines Blindniets beschrieben, wobei ein zylindrischer Schaft des Dorns zwischen zwei Haltebacken gehalten wird, während mit einem Stempel eine Spitze mit vergrößertem radialen Durchmesser angepresst wird. Durch die Haltebacken erfolgt nicht nur ein Halten des Dorns, sondern gleichzeitig auch eine Einprägung von zwei Einformungen und einer Sollbruchstelle. Weder die Einformungen noch die Sollbruchstelle sind dabei als umlaufende Rillen ausgebildet. Die Einformungen dienen dazu, eine partielle radiale Aufweitung des Schafts zu erzielen, die durch Reibschluss einen besseren Halt des Dorns in einer Hülse ermöglicht.

Schließringbolzen dienen in Verbindung mit Schließringen als zweiteilige Verbindungselemente für hochfeste Verbindungen an vorgelochten Werkstücken. Die Kombination von Schließringbolzen und Schließring wird auch allgemein als Schließringbolzensystem bezeichnet. Mit Schließringbolzensystemen lassen sich vorgespannte und vibrationssichere Verbindungen realisieren.

Die Herstellung einer Verbindung mit einem Schließringbolzensystem beginnt mit dem Einsetzen des Schließringbolzens in eine Öffnung im Werkstück. Ein Bolzenkopf des Schließringbolzens liegt dann an einer Oberfläche des Werkstücks an. Von der anderen Seite des Werkstücks wird anschließend der Schließring über den Schließringbolzen geführt. Mit einem entsprechenden Verarbeitungsgerät wird dann am Schließringbolzen gezogen, wobei ein Mundstück des Verarbeitungsgeräts über den Schließring gestülpt wird und diesen dabei plastisch verformt, so dass dieser eine formschlüssige Verbindung mit der Haltegeometrie des Schließringbolzens eingeht. Durch das Ziehen am Schließringbolzen wird dieser elastisch gedehnt und so eine Vorspannkraft auf das Werkstück ausgeübt. Bei Erreichen einer vorbestimmten Zugkraft reißt der Schließringbolzen an einer vorbestimmten Sollbruchstelle, und das Setzgerät kann entfernt werden. Damit ist der Setzvorgang abgeschlossen.

Schließringbolzen müssen hohe Scher- und Zugspannungen aufnehmen. Sie werden daher in der Regel in mehrstufigen Verfahren hergestellt, die die Schritte Kaltumformung, Walzen, Wärmebehandlung und abschließende Oberflächenbehandlung aufweisen. Bei der Kaltumformung wird dabei die äußere, grobe Form des Schließringbolzens erzeugt, während die Haltegeometrie durch Walzen eingeprägt werden. Die Haltegeometrie muss hohe Zugkräfte aufnehmen können und die Sollbruchlast in engen Grenzen definiert sein, so dass im Anschluss an das Walzen eine Wärmebehandlung des Schließringbolzens erforderlich ist. Ein derartiges Fertigungsverfahren ist aufwändig und daher kostenintensiv.

Der Erfindung liegt nun die Aufgabe zugrunde, den für die Herstellung eines haltbaren und flexibel einsetzbaren Schließringbolzens erforderlichen Aufwand gering zu halten.

Erfindungsgemäß wird diese Aufgabe bei einem Verfahren der eingangs genannten Art durch die Merkmale des kennzeichnenden Teils des Anspruchs 1 gelöst.

Durch das Einpressen der Haltegeometrie erfolgt eine so starke Kaltverfestigung des Rohlings bzw. der Haltegeometrie, dass eine anschließende Wärmebehandlung vollständig entfallen kann. Gegenüber dem Walzen erhöht sich dabei auch die Prozessgeschwindigkeit, da die vollständige Haltegeometrie in einem Schritt eingebracht wird während beim Walzen die Haltegeometrie nach und nach ausgeformt wird. Die Haltegeometrie ist dabei auch nicht mehr auf umlaufende Ausformungen beschränkt, sondern kann variabel gestaltet werden.

Die Haltegeometrie wird als radial umlaufende Rillen ausgebildet, wobei die Rillen durch mindestens einen senkrecht zu den Rillen verlaufenden Steg unterbrochen werden. Umlaufende Rillen bieten eine gute Oberfläche für eine formschlüssige Verbindung mit dem Schließring, der während des Setzvorgangs in diese Rillen eingeformt wird. Durch das Pressen der Haltegeometrie ist es ohnehin nicht möglich, die Rillen vollständig symmetrisch in den Schließringbolzen einzuprägen, da im Bereich der Verbindungsstellen zwischen den einzelnen Teilen des Formwerkzeugs eine geringere Verformung erfolgt. Dies wird nun dazu ausgenutzt, einen Steg einzubringen, der die umlaufenden Rillen unterbricht. Dieser Steg dient dann als Verdrehsicherung des Schließrings und verringert die zum Einformen des Schließrings erforderlichen Umformkräfte.

Erfindungsgemäss wird in den Bolzenkopf mindestens eine Drehmomentangriffsfläche eingeformt. Über diese Drehmomentangriffsfläche kann mit einem entsprechenden Werkzeug ein Drehmoment in den Schließringbolzen eingebracht werden. Durch ein Verdrehen des Schließringbolzens in Bezug zum Schließring erfolgt aufgrund des Steges ein erneutes Aufweiten des Schließrings, so dass die Verbindung gelöst werden kann.

Bevorzugterweise, durch die abschließende Wärmebehandlung nach dem Pressen erfolgt eine weitere Erhöhung der Festigkeit des Schließringbolzens. Gegebenenfalls kann auch noch eine Oberflächenbehandlung, beispielsweise eine galvanische Oberflächenbehandlung, des Schließringbolzens erfolgen.

Bevorzugterweise wird der Rohling von einem Draht abgetrennt. Dies kann sowohl gleichzeitig beim Einpressen der Haltegeometrie erfolgen, als auch schon zu einem früheren Zeitpunkt. Ein Draht ist relativ kostengünstig im gewünschten Durchmesser direkt vom Drahthersteller beziehbar. Der Draht verfügt über eine Festigkeit, die es erlaubt, durch eine definierte Sollbruchstellensymmetrie eine definierte Bruchlast des Bolzens zu generieren.

Bevorzugterweise wird eine Sollbruchstelle eingepresst. Mit einer Sollbruchstelle kann die beim Abschluss des Setzvorgangs erforderliche Abrisskraft eingestellt werden. Gleichzeitig wird auch definiert, an welcher Stelle der Schließringbolzen reißt. Das Einpressen der Sollbruchstelle stellt dabei eine einfache Möglichkeit zum Einbringen einer Durchmesserverringerung des Schließringbolzens dar. Es ist auch möglich, die Sollbruchstelle gleichzeitig mit der Haltegeometrie in den Rohling einzupressen.

Bevorzugterweise wird des Bolzenkopf an einem Ende des Rohlings angepresst. Der Rohling kann dadurch zunächst einen konstanten Durchmesser über seine gesamte Länge aufweisen. Die Durchmesservergrößerung im Bereich des Bolzenkopfs, die zur Anlage an einem Werkstück benötigt wird, wird dabei durch die beim Pressen auftretenden Fließvorgänge erzeugt.

Vorzugsweise wird zum Pressen mindestens ein zumindest zweiteiliges Formwerkzeug verwendet. Bei einem zweiteiligen Formwerkzeug werden die beiden Teile des Formwerkzeugs gegen den Rohling gepresst und erzeugen so die gewünschte Umformung. Ein zweiteiliges Formwerkzeug ist dabei in der Regel relativ günstig herzustellen.

In einer bevorzugten Ausführungsform erfolgt das Einpressen der Haltegeometrie, der Sollbruchstelle und des Bolzenkopfes gleichzeitig mit oder nach dem Abtrennen des Rohlings. Die Umformung des Schließringbolzens aus einem Draht kann also in einem Schritt mit dem Abtrennen des Rohlings vom Draht erfolgen. Durch das gleichzeitige Ausführen mehrerer Umformschritte wird für die Umformung des Schließringbolzens sehr wenig Zeit benötigt. Dadurch ist eine hohe Prozessgeschwindigkeit realisierbar.

Bevorzugterweise wird am vom Bolzenkopf abgewandten Ende des Rohlings eine Spitze angeformt. Diese Spitze erleichtert das Einführen des Bolzenkopfs in die Öffnungen der Werkstücke, aber auch das Überstreifen des Schließrings und das Ansetzen des Setzgeräts. Es ist dabei denkbar, dass die Spitze gleichzeitig mit dem Einpressen der Haltegeometrie angeformt wird oder direkt beim Abschneiden des Drahts durch eine spezifische Messgeometrie erzeugt wird.

Bei einem Schließringbolzen der eingangs genannten Art wird die Aufgabe dadurch gelöst, dass er einen Bolzenkopf aufweist, der mindestens eine Drehmomentangriffsfläche aufweist.

Dadurch ist es möglich, die Haltegeometrie einzupressen und so auf ein aufwändiges Walzen mit anschließender Wärmebehandlung zu verzichten. Darüber hinaus dient der Steg als Verdrehsicherung für den Schließring und verringert die zum Einformen des Schließrings erforderlichen Umformkräfte. Da der Bolzenkopf mindestens eine Drehmomentangriffsfläche aufweist, ist es möglich, ein Drehmoment in den Schließringbolzen einzubringen. Durch eine Verdrehung des Schließringbolzens im Verhältnis zum Schließring erfolgt aufgrund des Steges ein Wiederaufweiten des Schließrings, so dass dieser einfacher entfernt werden kann.

Dabei ist besonders bevorzugt, dass sich der Steg senkrecht zu den Rillen erstreckt. Dies erleichtert die Ausbildung der Formwerkzeuge, da der Steg dann einfach entlang einer geraden Verbindungsebene zwischen den Teilen des Formwerkzeugs erzeugt werden kann.

Bevorzugterweise weist der Schließringbolzen einen Bolzenkopf und eine Spitze auf, die an gegenüberliegenden Enden des Schafts angeordnet sind, wobei über den gesamten Schaft zwischen Bolzenkopf und Spitze die Rillen angeordnet sind. Der Bolzenkopf dient dabei zur späteren Anlage am Werkstück, die Spitze zum leichteren Einführen des Schließringbolzens in die Öffnungen des Werkstücks, zum leichteren Aufstreifen des Schließrings und zum einfacheren Ansetzen des Setzwerkzeugs. Werden nun über den gesamten Schaft zwischen Bolzenkopf und Spitze die Rillen angeordnet, kann der Schließringbolzen in Zusammenhang mit unterschiedlichen Dicken der zu verbindenden Werkstücke verwendet werden. Es ist dabei sogar denkbar, dass der Schließring nur in die an die Spitze anschließenden Rillen eingeformt wird. Das Setzen des Schließrings erfolgt dann, ohne dass Zug auf den Schließringbolzen ausgeübt wird.

Bevorzugterweise ist zwischen Rillen und Spitze eine Sollbruchstelle angeordnet. Diese Sollbruchstelle dient zur Definition der erforderlichen Abrisskraft beim Ende des Setzvorgangs und gleichzeitig zur Festlegung der Stelle, an der der Schließringbolzen reißt.

Bevorzugterweise weist die Sollbruchstelle einen vieleckigen, insbesondere quadratischen Querschnitt auf. Ein derartiger Querschnitt ist durch Pressen leicht zu erzeugen. Der Aufwand zum Einbringen der Sollbruchstelle wird daher gering gehalten.

Bei einer bevorzugten Ausführungsform sind zwischen Sollbruchstelle und Spitze Halterillen angeordnet. Diese Halterillen dienen zur besseren Kraftübertragung zwischen dem Setzwerkzeug und dem Schließringbolzen während des Setzvorganges. Dadurch können höhere Zugkräfte übertragen werden.

Bevorzugterweise ist der Übergang vom Bolzenkopf zum Schaft stufenförmig. Der Übergang vom größeren Durchmesser des Bolzenkopfs zum geringeren Durchmesser des Schafts erfolgt also nicht in einem Schritt, sondern weist mindestens eine Stufe auf. Durch eine entsprechende Wahl des Durchmessers dieser Stufe wird diese beim Setzen des Schließringbolzens in die Öffnung des Werkstücks hineingezogen, so dass zwischen Schließringbolzen und Werkstück eine Presspassung entsteht. Die Festigkeit der erzeugten Verbindung wird so erhöht.

Bevorzugterweise ist der Übergang vom Bolzenkopf zum Schaft stetig. Dadurch wird das leichte Einziehen des Bolzenkopfes in die Öffnung des Werkstücks begünstigt und so eine Pressverbindung zwischen Schließringbolzen und Werkstück erzeugt. Dabei ist der Schließringbolzen auch bei leicht unterschiedlichen Größen der Öffnungen im Werkstück einsetzbar.

Bevorzugterweise weisen die Rillen einen teilkreisförmigen Querschnitt auf. Ein derartiger Rillenquerschnitt begünstigt das Einfließen des Schließrings während des Setzvorgangs. Aufgrund der symmetrischen Ausbildung der Rillen sind dabei auch die Formwerkzeuge mit geringem Aufwand herstellbar.

In einem bevorzugten Ausführungsbeispiel weisen die Rillen einen trapezförmigen Querschnitt auf. Ein trapezförmiger Querschnitt ermöglicht eine Verzahnung des umgeformten Schließrings mit den Rillen des Schließringbolzens, und so eine hochfeste Verbindung.

Dabei ist besonders bevorzugt, dass eine Seite der jeweiligen Rille, die näher am Bolzenkopf liegt, einen flacheren Winkel zu Umfangsfläche des Schafts aufweist als eine entferntere Seite. Die entferntere Seite der jeweiligen Rille dient zur Übertragung des wesentlichen Teils der Haltekräfte zwischen Schließring und Schließringbolzen. Diese Haltekräfte sind Zugkräfte, die in Längsrichtung des Schließringbolzens, also auch parallel zur Umfangsfläche des Schafts, wirken. Eine in einem steilen Winkel zu Umfangsfläche angeordnete Seite ermöglicht daher eine gute Kraftübertragung. Über die näher am Bolzenkopf liegende Rille müssen keine Kräfte übertragen werden. Diese kann daher einen flachen Winkel zur Umfangsfläche aufweisen, was die zum Einformen des Schließrings erforderlichen Umformkräfte verringert.

Vorzugsweise ist der Schließringbolzen mit einem Schließring versehen, der hülsenförmig einen Innenraum umgibt. Der Schließringbolzen kann dabei den Innenraum des Schließrings nahezu vollständig ausfüllen. Mit Hilfe des Setzwerkzeugs wird der Schließring schließlich umgeformt, wobei das Material des Schließrings teilweise in die Haltegeometrie des Schließringbolzens fließt.

Es ist dabei besonders günstig, dass die Haltegeometrie des Schließringbolzens als umlaufende Rillen ausgebildet ist, die durch einen Steg unterbrochen sind, da dies das Umformen des Schließrings mit relativ geringen Kräften begünstigt, es ist aber auch denkbar, den Schließring mit anderen Schließringbolzen einzusetzen.

Bevorzugterweise weist der Innenraum einen runden Querschnitt auf. Dadurch wird beim Umformen des Schließrings der Schließring gleichmäßig in die Haltegeometrie des Schließringbolzens eingeformt.

In einer anderen bevorzugten Ausgestaltung weist der Innenraum einen vieleckigen Querschnitt auf. Dies ermöglicht eine weitere Verringerung der erforderlichen Umformkräfte. Zwar umschließt der Schließring nach Abschluss des Setzvorgangs dann die Halterillen nicht ganz so gleichmäßig wie bei einem Innenraum mit rundem Querschnitt, die übertragbaren Haltekräfte sind aber in der Regel trotzdem mehr als ausreichend.

Bevorzugterweise weist der Schließring eine runde Außenkontur auf. Ein derartiger Schließring ermöglicht zum Einen einen ästhetischen Gesamteindruck, zum Anderen können die Umformkräfte gleichmäßig in den Schließring eingebracht werden.

Bei einer anderen bevorzugten Ausführungsform weist der Schließring eine vieleckige Außenkontur auf. Die für die Verformung erforderlichen Umformkräfte können dadurch verringert werden. Gleichzeitig wird auch das Einbringen eines Drehmoments auf den Schließring erleichtert, wodurch der Schließring gegenüber dem Schließringbolzen verdreht werden kann, so dass der Schließring mit Hilfe des Steges des Schließringbolzens aufgeweitet und anschließend leichter entfernt werden kann.

Bevorzugterweise weist der Schließring ein erstes Ende und ein zweites Ende auf, wobei am zweiten Ende ein umlaufender Flansch angeordnet ist. Dieser Flansch dient zum Einen für eine vergrößerte Anlagefläche am Werkstück, zum Anderen auch als Anschlag für das Setzwerkzeug, wodurch erkennbar ist, wann der Schließring vollständig umgeformt ist.

Bevorzugterweise ist am ersten Ende eine Fase angeordnet. Diese Fase erleichtert das Ansetzen des Setzwerkzeugs.

In einer bevorzugten Ausführungsform ist am ersten Ende eine Verdickung angeordnet. Diese Verdickung führt zu einer besonders starken Umformung des Schließrings im Bereich des ersten Endes, wodurch ein verbesserter Formschluss der Verbindung über den gesamten Schließrillenbereich erzielt wird.

Bevorzugterweise ist im Innenraum mindestens eine radial umlaufende Nut angeordnet. Diese Nut erleichtert das Umformen des Schließrings und reduziert so die erforderlichen Umformkräfte.

Vorzugsweise weist der Flansch einen Fortsatz auf, der einen geringeren Durchmesser aufweist als der Flansch. Dieser Fortsatz kann während des Setzvorgangs in die Öffnung des Werkstücks eindringen, so dass der Schließring in das Werkstück eingepresst wird. Der Schließring wird dann nicht nur durch den Schließringbolzen am Werkstück gehalten, sondern auch zusätzlich dadurch, dass der Fortsatz in das Werkstück eingepresst wird. Insgesamt wird die Festigkeit der Verbindung so erhöht und eine zusätzliche Formschlusskomponente in die Verbindung eingebracht.

Weiterhin kann die Bohrung des Werkstücks bereits so ausgelegt sein, dass der Fortsatz im Sinne einer Passverbindung in die Bohrung eingesteckt werden kann.

Bevorzugterweise weist der Schließring mindestens zwei gegenüberliegende Einkerbungen auf. Diese Einkerbungen verringern die zum Umformen erforderlichen Umformkräfte.

Vorzugsweise ist in der Haltegeometrie des Schließringbolzens mikroverkapselter Kleb- und/oder Dichtstoff angeordnet. Dieser Kleb- oder Dichtstoff wird erst während des Setzvorgangs aktiviert und erhöht so die Festigkeit und Dichtigkeit der Verbindung.

Vorzugsweise ist im Innenraum des Schließrings mikroverkapselter Kleb- und/oder Dichtstoff angeordnet. Auch damit wird die Festigkeit und Dichtigkeit der Verbindung zwischen Schließring und Schließringbolzen erhöht. Gegebenenfalls können für eine weitere Verbesserung der Festigkeit und Dichtigkeit der Verbindung die Bereiche des Schließrings und des Schließringbolzens mit Kleb oder Dichtstoff versehen sein, die mit dem Werkstück bzw. den Werkstücken in Kontakt kommen.

Im Folgenden wir die Erfindung anhand bevorzugter Ausführungsbeispiele in Verbindung mit der Zeichnung näher beschrieben. Hierin zeigen:
- Fig. 1: eine Prinzipdarstellung eines Verfahrens zum Herstellen eines Schließringbolzens,
- Fig. 2a: eine erste Ausführungsform eines Schließringbolzens,
- Fig. 2b: einen Querschnitt des Schließringbolzens nach Fig. 2a,
- Fig. 3: eine weitere Ausführungsform eines Schließringbolzens,
- Fig. 4a: eine weitere Ausführungsform eines Schließringbolzens,
- Fig. 4b: einen ersten Querschnitt des Schließringbolzens nach Fig. 4a,
- Fig. 4c: einen zweiten Querschnitt durch den Schließringbolzen nach Fig. 4a,
- Fig. 5: eine weitere Ausführungsform eines Schließringbolzens,
- Fig. 6: eine Detailansicht eines Bolzenkopfs,
- Fig. 7: den Bolzenkopf nach Fig. 6 in geschnittener Ansicht,

- Fig. 8: eine zweite Ausführungsform eines Bolzenkopfs,
- Fig. 9: eine weitere Ausführungsform eines Bolzenkopfes und
- Fig. 10:
- bis 16b: verschiedene Ausführungsformen eines Schließrings.

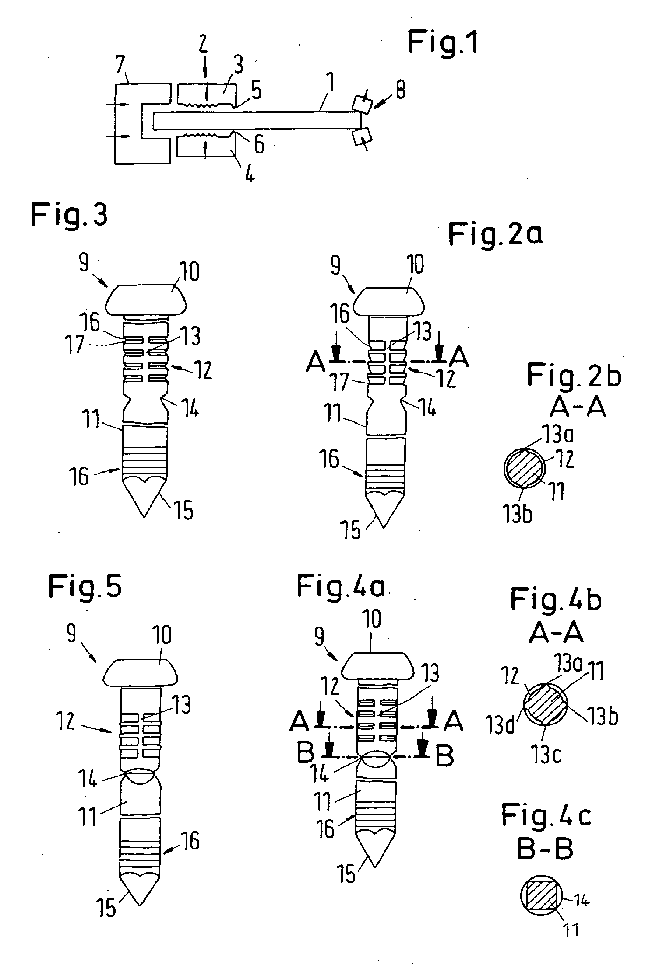

In Fig. 1 ist prinzipiell ein Verfahren zum Herstellen eines Schließringbolzens dargestellt. Dabei wird ein bereits von einem Draht abgetrennter Rohling 1 in mehreren Presswerkzeugen umgeformt. Ein zweiteiliges Formwerkzeug 2 mit zwei Formteilen 3, 4 wird seitlich gegen den Rohling 1 gepresst, so dass aufgrund der entsprechend ausgebildeten Oberfläche der Formteile 3 und 4 eine Haltegeometrie im Rohling 1 eingepresst wird. Die Formteile 3 und 4 weisen dabei jeweils einen Vorsprung 5, 6 auf, der eine Sollbruchstelle im Rohling 1 erzeugt.

Mit Hilfe eines weiteren Formwerkzeugs 7 kann an den Rohling 1 ein Bolzenkopf angepresst werden. Des Weiteren ist eine zweiteilige Vorrichtung 8 zum Anformen einer Spitze an den Rohling vorgesehen. Die Spitze wird dabei an dem dem Bolzenkopf gegenüberliegenden Ende des Rohlings 1 angeformt.

Die durch die jeweiligen Formwerkzeuge eingebrachten Presskräfte sind durch Pfeile symbolisiert.

In Fig. 2a ist ein Schließringbolzen 9 dargestellt, der einen Bolzenkopf 10 und einen Schaft 11 aufweist. Der Schaft 11 weist in einem vorbestimmten Abstand zum Bolzenkopf 10 mehrere umlaufende Rillen 12 auf, die durch einen Steg 13 unterbrochen sind, der sich senkrecht zu den Rillen 12 erstreckt. Im Anschluss an die Rillen 12 ist der Schaft 11 mit einer Sollbruchstelle 14 versehen. Am vom Bolzenkopf 10 abgewandten Ende des Schließringbolzens 9 ist eine Spitze 15 angeformt. Zwischen der Sollbruchstelle 14 und der Spitze 15 sind Halterillen 16 eingeprägt, die während des Setzvorgangs für einen sicheren Halt des Schließringbolzens 9 in einem nicht dargestellten Setzwerkzeug dienen sollen. Die Rillen 12 weisen einen trapezförmigen Querschnitt auf, wobei eine Seite 16 der jeweiligen Rille 12 einen flacheren Winkel zu einer Umfangsfläche des Schafts 11 aufweist als eine entferntere Seite 17.

Die Sollbruchstelle 14 ist durch zwei Einkerbungen gebildet.

In Fig. 2b ist ein Querschnitt durch den Schließringbolzen 9 dargestellt, wie er in Fig. 2a gezeigt ist. Dabei ist zu erkennen, dass die in den Schaft 11 eingepressten Rillen 12 durch zwei Stege 13a, 13b unterbrochen werden. Dieser Schließringbolzen ist also mit einem zweiteiligen Formwerkzeug hergestellt.

In Fig. 3 ist ein Schließringbolzen 9 dargestellt, der im Wesentlichen dem Schließringbolzen gemäß Fig. 2a entspricht. Unterschiedlich ist nur die Ausprägung der Rillen 12, die einen anderen Querschnitt aufweisen. Die Seiten 16, 17 der Rillen 12 weisen bei diesem Ausführungsbeispiel den gleichen Winkel zur Umfangsfläche des Schafts 11 auf. Dabei stoßen die beiden Seiten 16, 17 am Boden der Rillen 12 auch zusammen, so dass der Querschnitt der Rillen 12 dreieckig wird. Denkbar ist auch eine andere Ausführung der Rillen 12 mit einem teilkreisförmigen Querschnitt.

In Fig. 4a ist ein Schließringbolzen 9 dargestellt, der im Wesentlichen dem in Fig. 3 dargestellten Schließringbolzen entspricht. Allerdings sind bei der Ausführungsform nach Fig. 4a die Rillen 12 durch vier Stege 13a, 13b, 13c, 13d unterbrochen, wie aus Fig. 4b hervorgeht. Im Bereich der Sollbruchstelle 14 weist der Schaft 11 einen quadratischen Querschnitt auf. Dies ist in Fig. 4c dargestellt.

In Fig. 5 ist ein Schließringbolzen 9 dargestellt, bei dem der Querschnitt der Rillen 12 dem in Fig. 2a gezeigten Ausführungsbeispiel entspricht, der jedoch wie auch der Schließringbolzen 9 in Fig. 4a vier Stege 13a, 13b, 13c, 13d aufweist. Auch bei diesem Ausführungsbeispiel hat der Schaft 11 im Bereich der Sollbruchstelle 14 einen quadratischen Querschnitt.

Allen diesen Schließringbolzen ist gemeinsam, dass sie aus einem Rohling 1 durch Pressen hergestellt werden, der zunächst einen gleichmäßigen Durchmesser aufweist.

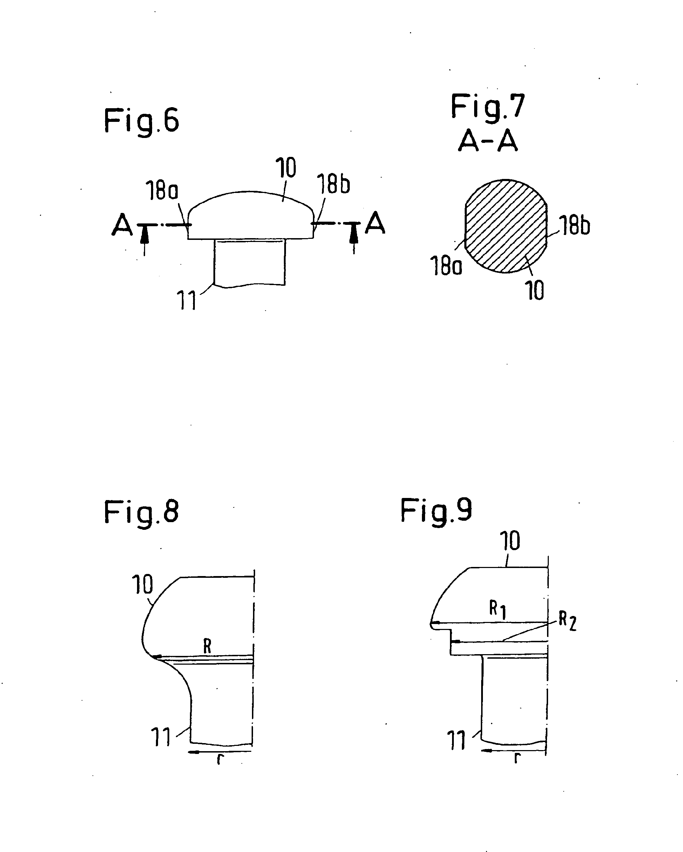

In Fig. 6 ist in Detailansicht ein Bolzenkopf 10 dargestellt, der zwei Drehmomentangriffsflächen 18a, 18b aufweist. Die Drehmomentangriffsflächen 18a, 18b sind, wie insbesondere in Fig. 7 zu erkennen ist, als geradlinige Abschnitte am Bolzenkopf 10 ausgebildet, der ansonsten einen runden Querschnitt aufweist. Es ist aber auch denkbar, den Bolzenkopf 10 beispielsweise mit einer sechseckigen Kontur zu versehen.

In Fig. 8 ist ein Bolzenkopf 10 dargestellt, bei dem der Übergang vom Bolzenkopf 10 zum Schaft 11 stetig ist. Ein Radius r des Schafts 11 nimmt also stetig zu, bis er einem Radius R des Bolzenkopfs 10 entspricht.

In Fig. 9 ist ein Schließringbolzen 9 dargestellt, wobei der Übergang vom Bolzenkopf 10 zum Schaft 11 stufenförmig ist. Dabei weist der Bolzenkopf in einem Bereich, der dem Schaft 11 benachbart ist, einen geringeren Radius R₂ auf, als in einem weiter entfernten Bereich, in dem er einen Radius R₁ aufweist.

Durch die in den Fig. 8 und 9 dargestellten Ausbildungen des Bolzenkopfs 10 soll ein leichtes Eindringen des Bolzenkopfs 10 in die Öffnung eines Werkstücks hervorgerufen werden, wodurch eine Presspassung zwischen dem Bolzenkopf 10 und dem Werkstück erzielt wird. Es ist dabei auch denkbar, bei einem Schließringbolzen gemäß Fig. 9 beim Übergang zwischen Bolzenkopf 10 und Schaft 11 weitere Stufen vorzusehen.

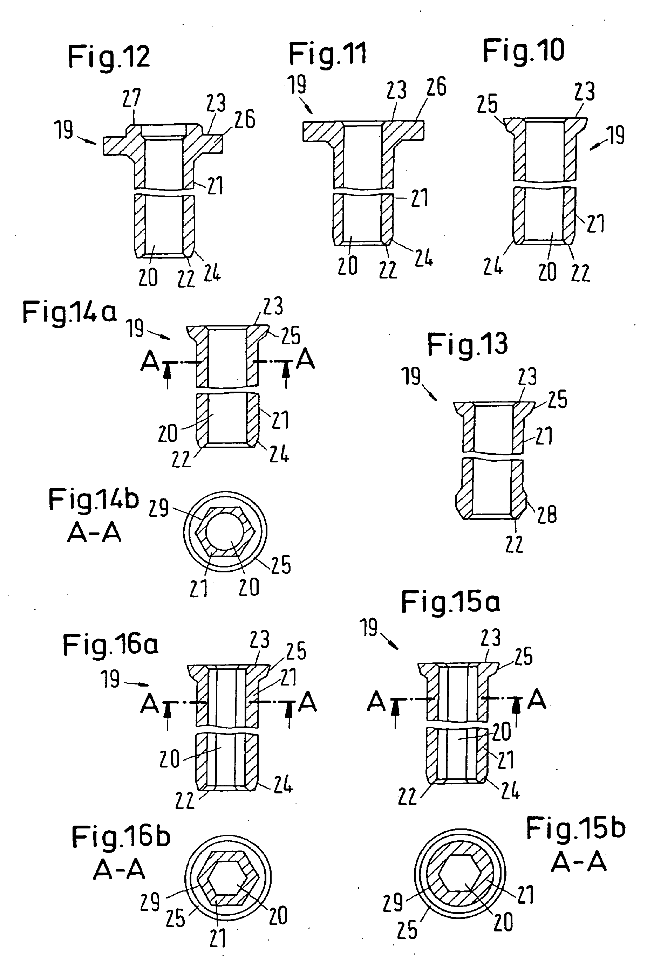

In Fig. 10 ist ein Schließring 19 dargestellt, der hülsenförmig einen Innenraum 20 umgibt. Der Schließring 19 weist dabei einen Schaft 21 mit einem ersten Ende 22 und einem zweiten Ende 23 auf. Am ersten Ende 22 ist eine Fase 24 an den Schaft 21 angeformt, die zum leichteren Ansetzen des Setzwerkzeugs dient. Am zweiten Ende 23 ist ein umlaufender Absatz 25 ausgebildet, der als Anschlag für das Setzwerkzeug dient. Sowohl der Schaft 11 als auch der Innenraum 20 weisen dabei einen kreisförmigen Querschnitt auf.

Der Schließring 19 gemäß Fig. 11 entspricht im Wesentlichen dem Schließring in Fig. 10. Allerdings ist der Absatz 25 deutlich vergrößert, um eine breitere Anlagefläche für ein Werkstück bereit zu stellen. Der Absatz 25 ist damit als Flansch 26 ausgebildet.

Gemäß Fig. 12 weist der Schließring 19 zusätzlich einen Fortsatz 27 am Flansch 26 auf, der einen geringeren Durchmesser als der Flansch 26 hat. Der Fortsatz 27 soll beim Setzen des Schließrings in die Öffnung des Werkstücks eindringen und so eine Pressverbindung mit dem Werkstück eingehen. Dadurch wird der Schließring 19 im Werkstück gehalten, so dass die Festigkeit der Verbindung von Schließringbolzen, Schließring und Werkstück erhöht wird.

Der Schließring 19 gemäß Fig. 13 weist nun eine Verdickung 28 am ersten Ende 22 auf. Dadurch wird zu Beginn des Setzvorgangs eine besonders starke Umformung des Schließrings 19 hervorgerufen.

Während in den Ausführungsbeispielen der Fig. 10 bis 13 sowohl der Innenraum 20 als auch der Schaft 21 einen runden Querschnitt aufweisen, weist der Schaft 21 des Schließrings 19 gemäß Fig. 14a einen sechseckigen Auβenkontur 29 auf. Dies ist in Fig. 14b dargestellt. Der Innenraum 20 ist weiterhin kreisförmig.

In den Fig. 15a und 15b ist ein Schließring 19 dargestellt, bei dem der Innenraum 20 einen sechseckigen Querschnitt aufweist und der Schaft 21 eine kreisförmige Außenkontur 29.

Die Fig. 16a und 16b zeigen einen Schließring 19, bei dem der Innenraum 20 einen sechseckigen Querschnitt und der Schaft 21 eine sechseckige Außenkontur 29 aufweist.

Auch wenn bei diesen Ausführungsbeispielen die Querschnitte des Innenraums bzw. die Außenkontur des Schafts entweder nur rund oder sechseckig dargestellt sind, ist es selbstverständlich möglich, den jeweiligen Querschnitt auch anderweitig mehreckig, also beispielsweise viereckig oder achteckig auszubilden.

Durch die Herstellung des Schließringbolzens durch einen Pressvorgang, wobei keine Zwischenwärmebehandlung erforderlich ist, ist es möglich, kostengünstig und schnell einen Schließringbolzen herzustellen. Es hat sich dabei herausgestellt, dass über die mittels Pressen eingebrachten Rillen ausreichend hohe Kräfte übertragen werden können. Auch der für das Herstellverfahren mittels Pressen charakteristische Steg, der an den Berührungsflächen zwischen den einzelnen Teilen der Formwerkzeuge entsteht, hat sich als vorteilhaft erwiesen. Insgesamt wird durch das erfindungsgemäße Vorgehen ein Schließringbolzensystem erhalten, was kostengünstig und schnell herstellbar ist und gleichzeitig verbesserte Halteeigenschaften aufweist. Auch die Außenkontur des Schließrings kann mittels Pressen eingebracht werden.

## Patentansprüche

1. Verfahren zum Herstellen eines Schließringbolzens (9), der eine Haltegeometrie aufweist, die als radial umlaufende Rillen (12) ausgebildet wird, wobei die Rillen (12) durch mindestens einen senkrecht zu den Rillen verlaufenden Steg (13) unterbrochen werden, **dadurch gekennzeichnet, dass** der schließringbolzen (9) einen Bolzenkopf (10) aufweist, der mindestens eine Drehmoment angriffsfläche (18) aufweist und, dass die Haltegeometrie in einem stillstehenden Rohling (1) eingepresst wird.

2. Verfahren nach Anspruch 1, **dadurch gekennzeichnet, dass** der Rohling (1) von einem Draht abgetrennt wird.

3. Verfahren nach einem der Ansprüche 1 oder 2, **dadurch gekennzeichnet, dass** eine Sollbruchstelle (14) eingepresst wird.

4. Verfahren nach einem der Ansprüche 1 bis 3, **dadurch gekennzeichnet, dass** an einem Ende des Rohlings der Bolzenkopf (10) angepresst wird, in den die mindestens eine Drehmomentangriffsfläche (18) eingeformt wird.

5. Verfahren nach einem der Ansprüche 1 bis 4, **dadurch gekennzeichnet, dass** zum Pressen mindestens ein zumindest zweiteiliges Formwerkzeug (2) verwendet wird.

6. Verfahren nach einem der Ansprüche 1 bis 5, **dadurch gekennzeichnet, dass** das Einpressen der Haltegeometrie, der Sollbruchstelle (14) und des Bolzenkopfes (10) gleichzeitig mit oder nach dem Abtrennen des Rohlings (1) erfolgt.

7. Verfahren nach einem der Ansprüche 1 bis 6, **dadurch gekennzeichnet, dass** am vom Bolzenkopf abgewandten Ende des Rohlings eine Spitze angeformt wird.

8. Verfahren nach einem der Ansprüche 1 bis 7, **dadurch gekennzeichnet, dass** nach dem Pressen eine Wärmebehandlung erfolgt.

9. Schließringbolzen mit einem Schaft, der eine Haltegeometrie aufweist, die als radial umlaufender Rillen ausgebildet ist, wobei die Rillen (12) durch mindestens einen Steg (13) unterbrochen sind, **dadurch gekennzeichnet, dass** er einen Bolzenkopf (10) aufweist, der mindestens eine Drehmomentangriffsfläche (18) aufweist.

10. Schließringbolzen nach Anspruch 9, **dadurch gekennzeichnet, dass** sich der Steg (13) senkrecht zu den Rillen (12) erstreckt.

11. Schließringbolzen nach Anspruch 9, **dadurch gekennzeichnet, dass** er den Bolzenkopf (10) und eine Spitze (15) aufweist, die an gegenüberliegenden Enden des Schafts (11) angeordnet sind, wobei über den gesamten Schaft (11) zwischen Bolzenkopf (10) und Spitze (15) die Rillen (12) angeordnet sind.

12. Schließringbolzen nach einem der Ansprüche 9 bis 11, **dadurch gekennzeichnet, dass** zwischen Rillen (12) und Spitze (15) eine Sollbruchstelle (14) angeordnet ist, die gegebenenfalls einen vieleckigen, insbesondere quadratischen Querschnitt aufweist.

13. Schließringbolzen nach einem der Ansprüche 9 bis 12, **dadurch gekennzeichnet, dass** zwischen Sollbruchstelle (14) und Spitze (15) Halterillen (16) angeordnet sind.

14. Schließringbolzen nach einem der Ansprüche 9 bis 13, **dadurch gekennzeichnet, dass** der Übergang vom Bolzenkopf (10) zum Schaft (11) stufenförmig oder stetig ist.

15. Schließringbolzen nach einem der Ansprüche 9 bis 14, **dadurch gekennzeichnet, dass** die Rillen (12) einen teilkreisförmigen oder trapezförmigen Querschnitt aufweisen.

16. Schließringbolzen nach Anspruch 15, **dadurch gekennzeichnet, dass** eine Seite (16) der jeweiligen Rille (12), die näher am Bolzenkopf (10) liegt, einen flacheren Winkel zur Umfangsfläche des Schafts (11) aufweist als eine entferntere Seite (17).

17. Schließringbolzen nach einem der Ansprüche 9 bis 16, **dadurch gekennzeichnet, dass** er mit einem Schließring (19) versehen ist, der hülsenförmig einen Innenraum (20) umgibt, der insbesondere einen runden oder einen vieleckigen Querschnitt aufweist.

18. Schließringbolzen nach Anspruch 17, **dadurch gekennzeichnet, dass** der Schließring (19) eine runde oder vieleckige Außenkontur (29) aufweist.

19. Schließringbolzen nach Anspruch 17 oder 18, **dadurch gekennzeichnet, dass** der Schließring (19) ein erstes Ende (22) und ein zweites Ende (23) aufweist, wobei am zweiten Ende (23) ein umlaufender Flansch (26) angeordnet ist, wobei gegebenenfalls am ersten Ende (22) eine Fase (24) oder eine Verdickung (28) angeordnet ist.

20. Schließringbolzen nach einem der Ansprüche 17 bis 19, **dadurch gekennzeichnet, dass** im Innenraum (20) der Schliessring (19) mindestens eine radial umlaufende Nut angeordnet ist.

21. Schließringbolzen nach Anspruch 19 oder 20, **dadurch gekennzeichnet, dass** am Flansch (26) ein Fortsatz (27) angeordnet ist, der einen geringeren Durchmesser aufweist als der Flansch (26).

22. Schließringbolzen nach einem der Ansprüche 17 bis 21, **dadurch gekennzeichnet, dass** der Schließring (19) mindestens zwei gegenüberliegende Einkerbungen aufweist.

## Claims

1. A method for producing a locking ring bolt (9), which comprises a holding geometry formed as radially peripheral grooves (12) interrupted by at least one web (13) extending perpendicular to the grooves (12) **characterized in that** the locking ring bolt (9) comprises a bolt head (10) which comprises at least one torque working surface (18) and that the holding geometry is pressed into a stationary blank (1).

2. The method in accordance with claim 1, **characterized by** separating the blank (1) from a wire.

3. The method in accordance with claim 1 or 2, **characterized by** pressing a predetermined breaking point (14).

4. The method in accordance with one of the claims 1 to 3, **characterized by** pressing a bolt head (10) on an end of the blank (1) and forming the at least one torque working surface (18) on the bolt head (10).

5. The method in accordance with one of the claims 1 to 4, **characterized by** using at least an at least two-part mold (3, 4) for pressing.

6. The method in accordance with one of the claims 1 to 5, **characterized in that** the pressing of the holding geometry (12), of the predetermined breaking point (14), and of the bolt head (10) occurs one of at a same time as or after separating the blank (1) from the wire.

7. The method in accordance with one of the claims 1 to 6, **characterized by** shaping a point (15) on an end of the blank (1) opposite the bolt head (10).

8. The method in accordance with one of the claims 1 to 7, **characterized in that** a heat treating occurs after the pressing.

9. A locking ring comprising a shank (11) having a holding geometry (12) that includes radially peripheral grooves (12) interrupted by at least one web (13), **characterized in that** it comprises a bolt head (10) having at least one torque working surface (18).

10. The locking ring bolt in accordance with claim 9, **characterized in that** the web (13) extends perpendicularly to the grooves (12).

11. The locking ring bolt in accordance with claim 9, **characterized in that** it comprises the bolt head (10) and a point (15) located on opposite ends of the shank (11), wherein the grooves (12) are arranged over an entirety of the shank (11) between bolt head (10) and the point (15).

12. The locking ring bolt in accordance with one of the claims 9 to 11, **characterized in that** a predetermined breaking point (14) is located between the grooves (12) and the point (15) wherein the predetermined breaking point (14) has eventually a polygonal, in particular a square, cross-section.

13. The locking ring bolt in accordance with one of the claims 9 to 12, **characterized in that** holding grooves (16) are located between the predetermined breaking point (14) and the point (15).

14. The locking ring bolt in accordance with one of the claims 9 to 13, **characterized in that** a transition from the bolt head (10) to the shank (11) is step-shaped or continues.

15. The locking ring bolt in accordance with one of the claims 9 to 14, **characterized in that** the holding grooves (16) have a circle segment or a trapezoidal cross-sectional shape.

16. The locking ring bolt in accordance with claim 15, **characterized in that** one side of a respective groove (12) that lies closer to the bolt head (10) has a shallower angle to a circumferential surface of the shank (11) than a more distant other side (17).

17. The locking ring bolt in accordance with one of the claims 9 to 16, **characterized in that** it is provided with a locking ring (19), the locking ring (19) being arranged to surround an interior (20) in a sleeve-shaped manner, wherein the interior (20) in particular has a round or polygonal cross-sectional shape.

18. The locking ring bolt in accordance with claim 17, **characterized in that** the locking ring (19) has a round or polygonal outer contour.

19. The locking ring bolt in accordance with claim 17 or 18, **characterized in that** the locking ring (19) comprises a first end (22) and a second end (23), and a peripheral flange (26) is arranged on the second end (23) wherein eventually the locking ring (19) further comprises a chamfer (24) or a thickening (28) arranged on the first end (22).

20. The locking ring bolt in accordance with one of claims 17 to 19, **characterized in that** at least one radially peripheral channel is positioned in the interior (20) of the locking ring (19).

21. The locking ring bolt in accordance with one of claims 19 to 20, **characterized in that** an appendage (27) is arranged on the flange (26), the appendage (27) having a smaller diameter than the flange (26).

22. The locking ring bolt in accordance with any of claims 17 to 21, **characterized in that** the locking ring (19) comprises at least two notches lying opposite one another.

## Revendications

1. Procédé de fabrication d'un boulon à bague d'arrêt (9) qui comporte une géométrie de maintien, laquelle est réalisée sous forme de rainures (12) périphériques radiales, lesdites rainures (12) étant interrompues par au moins une barrette (13) qui s'étend perpendiculairement aux rainures, **caractérisé en ce que** le boulon à bague d'arrêt (9) comporte une tête de boulon (10) qui présente au moins une surface d'attaque de couple (18), et **en ce que** la géométrie de maintien est réalisée à la presse dans une ébauche stationnaire (1).

2. Procédé selon la revendication 1, **caractérisé en ce que** l'ébauche (1) est découpée à partir d'un fil.

3. Procédé selon l'une des revendications 1 ou 2, **caractérisé en ce qu'**un emplacement de rupture de consigne (14) est ménagé à la presse.

4. Procédé selon l'une des revendications 1 à 3, **caractérisé en ce que** la tête de boulon (10) est réalisée à la presse à une extrémité de l'ébauche, et au moins une surface d'attaque de couple (18) est conformée dans ladite tête.

5. Procédé selon l'une des revendications 1 à 4, **caractérisé en ce que** l'on utilise pour le pressage au moins un outil de mise en forme en deux parties (2).

6. Procédé selon l'une des revendications 1 à 5, **caractérisé en ce que** la réalisation à la presse de la géométrie de maintien, de l'emplacement de rupture de consigne (14) et de la tête de boulon (10) a lieu simultanément ou après la découpe de l'ébauche (1).

7. Procédé selon l'une des revendications 1 à 6, **caractérisé en ce qu'**une pointe est conformée à l'extrémité de l'ébauche détournée de la tête du boulon.

8. Procédé selon l'une des revendications 1 à 7, **caractérisé en ce qu'**un traitement thermique a lieu après le pressage.

9. Boulon à bague d'arrêt comprenant une tige qui présente une géométrie de maintien, laquelle est réalisée sous forme de rainures radiales périphériques, lesdites rainures (12) étant interrompues par au moins une barrette (13), **caractérisé en ce qu'**il comprend une tête de boulon (10) qui présente au moins une surface d'attaque de couple (18).

10. Boulon à bague d'arrêt selon la revendication 9, **caractérisé en ce que** la barrette (13) s'étend perpendiculairement aux rainures (12).

11. Boulon à bague d'arrêt selon la revendication 9, **caractérisé en ce qu'**il comprend la tête de boulon (10) et une pointe (15), qui sont agencées à des extrémités opposées de la tige (11), et les rainures (12) sont ménagées sur la totalité de la tige (11) entre la tête de boulon (10) et la pointe (15).

12. Boulon à bague d'arrêt selon l'une des revendications 9 à 11, **caractérisé en ce qu'**un emplacement de rupture de consigne (14) est ménagé entre les rainures (12) et la pointe (15), lequel présente le cas échéant une section polygonale, en particulier carrée.

13. Boulon à bague d'arrêt selon l'une des revendications 9 à 12, **caractérisé en ce que** des rainures de maintien (16) sont ménagées entre l'emplacement de rupture de consigne (14) et la pointe (15).

14. Boulon à bague d'arrêt selon l'une des revendications 9 à 13, **caractérisé en ce que** la transition de la tête de boulon (10) à la tige (11) est en forme de gradins ou continue.

15. Boulon à bague d'arrêt selon l'une des revendications 9 à 14, **caractérisé en ce que** les rainures (12) présentent une section en forme de cercle partiel ou en forme de trapèze.

16. Boulon à bague d'arrêt selon la revendication 15, **caractérisé en ce qu'**un côté (16) de la rainure respective (12), qui est situé plus proche de la tête de boulon (10), forme avec la surface périphérique de la tige (11) un angle plus plat qu'un côté plus éloigné (17).

17. Boulon à bague d'arrêt selon l'une des revendications 9 à 16, **caractérisé en ce qu'**il est pourvu d'une bague d'arrêt (19) qui présente la forme d'une douille et entoure une chambre intérieure (20) et présente en particulier une section ronde ou une section polygonale.

18. Boulon à bague d'arrêt selon la revendication 7, **caractérisé en ce que** la bague d'arrêt (19) présente un contour extérieur (29) rond ou polygonal.

19. Boulon à bague d'arrêt selon la revendication 17 ou 18, **caractérisé en ce que** la bague d'arrêt (19) comporte une première extrémité (22) et une seconde extrémité (23), avec une bride périphérique (26) agencée à la seconde extrémité (23), un chanfrein (24) ou un épaississement (28) étant prévu le cas échéant à la première extrémité (22).

20. Boulon à bague d'arrêt selon l'une des revendications 17 à 19, **caractérisé en ce qu'**au moins une gorge radiale périphérique est agencée dans l'espace intérieur (20) de la bague d'arrêt (19).

21. Boulon à bague d'arrêt selon la revendication 19 ou 20, **caractérisé en ce qu'**un prolongement (27) est agencé sur la bride (26), lequel présente un diamètre plus petit que la bride (26).

22. Boulon à bague d'arrêt selon l'une des revendications 17 à 21, **caractérisé en ce que** la bague d'arrêt (19) comporte au moins deux encoches opposées.
